# EUROPÄISCHE PATENTSCHRIFT

(11) **EP 1 483 077 B1**
(45) Veröffentlichungstag und Bekanntmachung des Hinweises auf die Patenterteilung: **26.10.2005**
(21) Anmeldenummer: 03717203.8
(22) Anmeldetag: 07.03.2003
(51) Int. Cl.: B23K 20/10, B29C 65/74, B29C 65/08, B29C 57/10

(54) **VORRICHTUNG ZUM ABDICHTEN UND TRENNEN EINES ROHRABSCHNITTES MIT ULTRASCHALL**
DEVICE FOR THE ULTRASONIC SEALING AND SEPARATION OF A PIPE SECTION
DISPOSITIF POUR RENDRE ETANCHE ET POUR SECTIONNER UNE SECTION TUBULAIRE A L'AIDE D'ULTRASONS

(30) Priorität: 08.03.2002 DE 10210075
(43) Veröffentlichungstag der Anmeldung: 08.12.2004
(73) Patentinhaber: Stapla Ultraschalltechnik GmbH, 65451 Kelsterbach (DE)
(72) Erfinder: MÖRSCHNER, Rolf, 65205 Wiesbaden (DE); WAGENBACH, Udo, 35418 Buseck (DE)
(74) Vertreter: Stoffregen, Hans-Herbert
(86) Internationale Anmeldenummer: PCT/EP2003/002374
(87) Internationale Veröffentlichungsnummer: WO 2003/076116

(56) Entgegenhaltungen:
- DE-A- 1 479 511
- FR-A- 2 076 164
- US-A- 3 681 176
- US-A- 3 976 240
- US-A- 4 025 374
- US-A- 4 517 790
- US-A- 5 843 256

## Beschreibung

Die Erfindung bezieht sich auf eine Vorrichtung zum fluiddichten Abdichten und Trennen eines Rohrabschnittes mittels einer Ultraschallschweißvorrichtung, umfassend eine Sonotrode mit zwei zueinander beabstanden beabstandeten ersten Schweißflächen, denen zwei zweite Schweißflächen der Gegenelektrode zugeordnet sind, und zwischen den zwei ersten Schweißflächen verlaufendem über den ersten Schweißflächen vorstehenden Trennelement, dem eine Aussparung zwischen den zwei zweiten Schweißflächen der Gegenelektrode zugeordnet ist (siehe, z.B., DE-A- 14 79 511).

Bei Geräten und Anlagen der Mess- bzw. Kühltechnik werden Rohre benutzt, die zunächst evakuiert und sodam mit einem Kühlgas befüllt werden. Hierzu werden Rohre mit einer Kupplung verbunden. Nach dem Befüllen muss der kupplungsseitige Abschnitt des Rohres abgetrennt werden. Hierzu ist es erforderlich, dass das Rohr, das zu der Anlage bzw. dem Gerät wie Kühlschrank oder Klimaanlage führt, fluiddicht verschlossen wird.

Nach dem Stand der Technik ist ein Verquetschen und Hartlöten bekannt. Auch gelangt eine Klebetechnik zur Anwendung, bei der das befüllte Rohr mit einer Kappe verschlossen wird, die ihrerseits mit dem Rohr verklebt wird.

Sofern ein fluiddichtes Verschließen mittels Hartlöten erfolgt, ist der Nachteil gegeben, dass dann, wenn das Rohr zuvor nicht dicht verquetscht wurde, sich in dem aufzutragenden Lot ein Schlot bildet, der vom aus dem Rohr austretenden Gas durchsetzt wird und somit ein Leck bildet. Unabhängig hiervon kann eine entsprechende Technik nur bei FCKW-Fluiden benutzt werden, da diese nicht brennbar sind.

Heutzutage ist das FCKW weitgehend durch Isobutan ersetzt, das jedoch hochexplosiv ist. Somit ist ein Hartlöten nicht mehr möglich. Daher hat sich das Ultraschallschweißen durchgesetzt, mit dem in einem Arbeitsgang ein Verquetschen und fluiddichtes Verschließen des zunächst evakuierten und sodann mit einem Kühlgas gefüllten Rohres möglich ist.

Bei den bekannten Ultraschallschweißvorrichtungen zum fluiddichten Verschließen von Rohren gelangen Sonotroden zum Einsatz, die eine erste Schweißfläche aufweisen, neben der ein Schneidelement verläuft. Entsprechend weist die zugeordnete Gegenelektrode - auch Amboss genannt - eine der ersten Schweißfläche zugeordnete zweite Schweißfläche auf, neben der ein dem Schneidelement zugeordnetes Gegenelement wie Kante verläuft.

In Abhängigkeit davon, ob ein sogenanntes "rechtes" oder "linkes" Ende eines Rohres zu der Kupplung führt, müssen unterschiedliche Werkzeuge benutzt werden. Rein theoretisch könnte auch mit einem Werkzeug gearbeitet werden, sofern entsprechend die Ultraschallschweißvorrichtung umpositioniert werden würde, eine Möglichkeit, die jedoch aus Praktikabilitätsgründen nicht in Betracht kommt.

Eine Vorrichtung der eingangs genannten Art ist z. B. der DE-A 14 79 511 zu entnehmen. Mit einer entsprechenden Ultraschallschweißvorrichtung werden jedoch keine Metallrohre, sondern Kunststoffrohre verschweißt und getrennt. Hierzu weist eine Sonotrode ein vorspringendes Trennelement auf, das in eine entsprechend angepasste Ausnehmung eines Ambosses beim Schweißen und Trennen eingreifen kann.

Die US-A 4,517,790 bezieht sich auf eine Ultraschallschweißvorrichtung, um Kunststoffverpackungen zu verschweißen. Um Folien zu durchtrennen, weist eine Sonotrode ein eingesetztes Trennmesser auf, dem eine im Schnitt V-förmige Ausnehmung der Gegenelektrode zugeordnet ist.

Um Kontakte mittels Ultraschallschweißens aufzubringen, weist nach der US-A 3,976,240 eine Sonotrode eine ambossseitige Aussparung auf, die von einer Trennkante umgeben ist.

Eine Ultraschallschweißvorrichtung nach der US-A 4,025,374 oder der US 3,681,176, mit der Kunststoffteile verschweißt werden, weist eine Sonotrode mit vorspringendem Trennelement auf, dem eine ebene Fläche eines Ambosses zugeordnet ist.

Der vorliegenden Erfindung liegt das Problem zu Grunde, eine Vorrichtung der eingangs genannten Art so weiterzubilden, dass ein Abschnitt eines Rohres ohne Werkzeugwechsel oder Umpositionieren der Ultraschallschweißvorrichtung derart getrennt werden kann, dass das Rohr unabhängig davon, auf welcher Seite der Abschnitt verläuft, fluiddicht verschlossen wird.

Erfindungsgemäß wird das Problem im Wesentlichen dadurch gelöst, dass Breite öffnungsseitigen Bereichs der Aussparung geringer als Breite bodenseitigen Bereichs der Aussparung ist.

Erfindungsgemäß werden die Werkzeuge der Ultraschallschweißvorrichtung derart weitergebildet, dass das Rohr über zwei zueinander beabstandete Bereiche fluiddicht verschlossen wird, um sodann das Rohr zwischen den abgedichteten Bereichen zu durchtrennen. Somit ist unbeachtlich, auf welcher Seite ein Rohrabschnitt, der zu einem Anschluss wie einer Kupplung führt, abzutrennen ist. Selbstverständlich kann der Bereich, der durchtrennt wird, ebenfalls während der Uluaschallanwendung verschweißt sein. Da öffnungsseitiger Bereich der Aussparung schmaler als bodenseitiger Bereich ist, also eine geringere Breite als der Bodenbereich aufweist, ergibt sich der Vorteil, dass beim Trennen anfallendes Material in der Aussparung gesammelt wird, so dass ein laufender Bearbeitungsprozess oder nachfolgende nicht behindert werden. Dabei sollte zusätzlich der öffnungsseitige Rand der Aussparung scharfkantig ausgebildet sein, um das Durchtrennen des Rohres von dem zu dem Anschluss wie Kupplung führenden Abschnitt zu erleichtern.

Insbesondere weist die Aussparung im Querschnitt einen öffnungsseitigen rechteckigen äußeren Abschnitt und einen trapezförmigen inneren Abschnitt auf. Zusätzlich kann im Bodenbereich der Aussparung eine Vertiefung oder Senke vorgesehen sein, um Material gezielt zu sammeln.

Bezüglich des Schneidelementes ist anzumerken, dass dessen Breite kleiner als die öffnungsseitig verlaufende Breite der Längsaussparung ist. Des Weiteren weist das Schneidelement eine im Wesentlichen quaderförmige Geometrie auf, dessen der Gegenelektrode zugewandte Außenfläche einen konkaven Verlauf zeigt, so dass sich Längsschneidkanten ausbilden.

Des Weiteren sollten die ersten Schweißflächen jeweils eine konvex verlaufende Oberfläche aufweisen, die schneidelementseitig in in einer gemeinsamen Ebene verlaufende innere Abschnitte übergehen, die ihrerseits parallel oder im Wesentlichen parallel zur Außenfläche des Schneidelementes oder von dieser aufgespannten Ebene verlaufen.

Weitere Einzelheiten, Vorteile und Merkmale der Erfindung ergeben sich nicht nur aus den Ansprüchen, den diesen zu entnehmenden Merkmalen, sondern auch aus der nachfolgenden Beschreibung eines der Zeichnung zu entnehmenden bevorzugten Ausführungsbeispiels.

Es zeigen:
- Fig. 1: eine Prinzipdarstellung der erfindungsgemäß ausgebildeten Ultraschallschweißvorrichtung zur Erläuterung deren Funktionsweise,

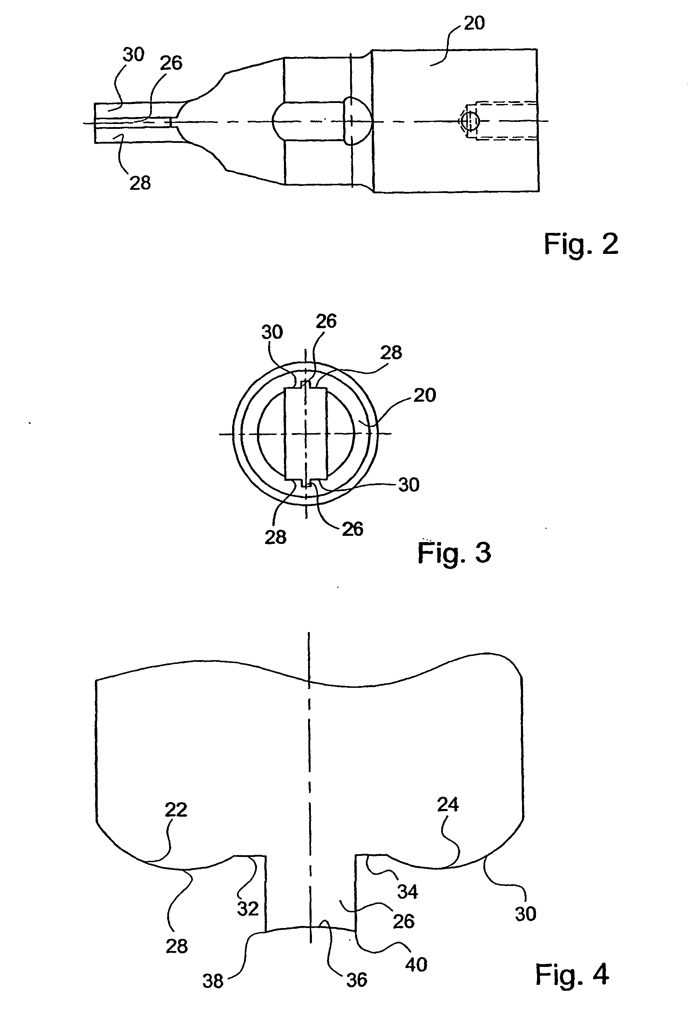

- Fig. 2: eine Draufsicht einer Sonotrode der Ultraschallschweißvorrichtung gemäß Fig. 1,
- Fig. 3: eine Vorderansicht der Sonotrode gemäß Fig. 2,
- Fig. 4: die Sonotrode gemäß Fig. 3 in vergrößerter Darstellung und im Ausschnitt
- Fig. 5: eine Draufsicht einer der Sonotrode gemäß der Fig. 2 bis 4 zugeordneten Gegenelektrode und
- Fig. 6: einen Schnitt durch die Gegenelektrode gemäß Fig. 5.

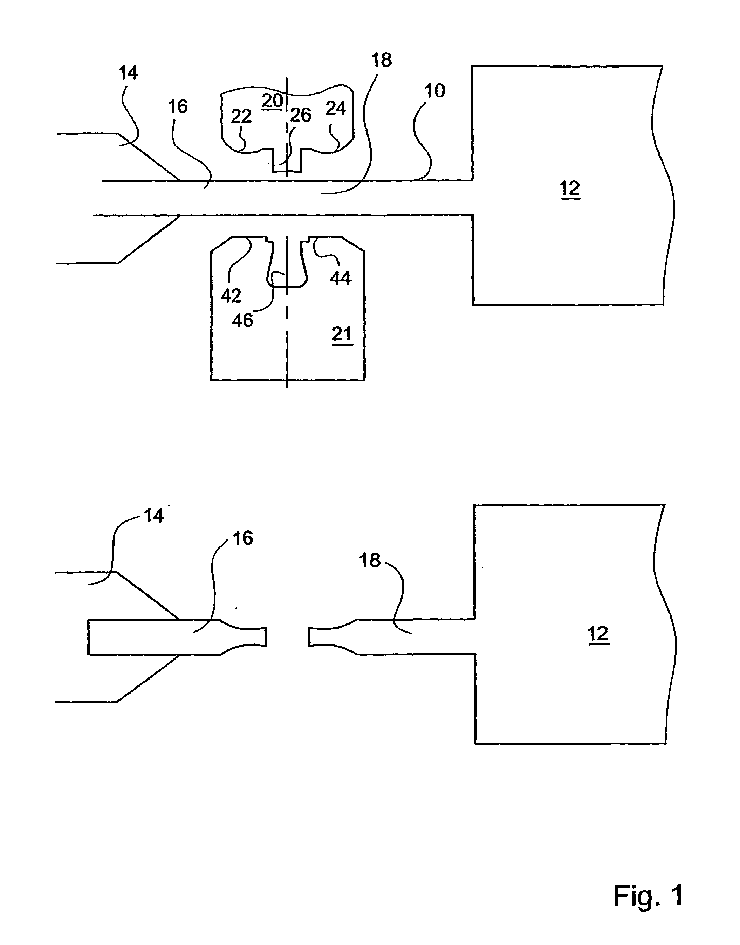

Rohre, die z. B. für Thesmofühler, Kümaanlagen oder Kühlschränke benötigt werden, müssen zunächst evakuiert und sodann mit einem Kühlgas befüllt werden. Anschließend ist ein hermetisches Verschließen des Rohres erforderlich. Hierzu wird gemäß der Fig. 1 ein entsprechendes Rohr 10 z. B. eines Kompressors 12 - ohne dass hierdurch die Erfindung eingeschränkt wird - über eine Kupplung 14 mit einer Evakuier- bzw. Gasbefülleinrichtung verbunden. Nach dem Evakuieren des Rohres 10 und Befüllen dieses mit Kühlgas muss sodann das Rohr 10 endseitig fluiddicht verschlossen werden. Gleichzeitig muss der zu der Kupplung 14 führende Abschnitt 16 abgetrennt werden.

Steht nach dem Ausführungsbeispiel der Fig. 1 das Rohr 10 links von dem Kompressor 12 ab, so ist es auch möglich, dass dieses rechts von dem Kompressor oder einem sonstigen Gerät der Mess- oder Kühltechnik abragt. Um jedoch unabhängig von der Position des Rohres 10 in Bezug auf die Kupplung 14 oder einen sonstigen Anschluss ein sicheres Abdichten und/oder Verschließen und Abtrennen des Rohres 10 von dem zu dem Kompressor 12 oder einer entsprechenden Vorrichtung führenden Abschnitt 18 zu ermöglichen, werden Sonotrode 20 und Gegenelektrode oder Amboss 21 in einer Ultraschallschweißvorrichtung derart ausgebildet, dass sich zwei abgedichtete Schweißbereiehe ergeben, zwischen denen das Rohr 10 getrennt, also die Abschnitte 16 und 18 voneinander durchtrennt werden. Dabei ergibt sich gleichzeitig der Vorteil, dass der zu der Kupplung 14 führende Rohrabschnitt 16 ebenfalls außenseitig fluiddicht verschlossen ist, so dass auf Grund des in der Kupplung 14 herrschenden Überdrucks Gas durch den Rohrabschnitt 16 nicht nach außen strömen kann.

Um die gewünschten zwei zueinander beabstandeten Dichtbereiche auszubilden, weist die Sonotrode 20 zwei zueinander beabstandete Schweißflächen 22, 24 auf, zwischen denen ein Schneidelement 26 verläuft. Die Schweißflächen 22, 24 bestehen aus äußeren konvex verlaufenden Bereichen 28, 30, die in einen geradlinigen und in in einer gemeinsamen Ebene verlaufende innere Bereiche 32, 34 übergehen, die an dem Schneidelement 26 angrenzen. Die Bereiche 32, 34 verlaufen demnach im Ausführungsbeispiel senkrecht zur Hochachse der Sonotrode 20.

Das Schneidelement 26 selbst weist im Schnitt eine Rechteckform auf, also eine quaderförmige Geometrie, wobei die dem Amboss 21 zugewandte Außenfläche 36 einen konkaven Verlauf zeigt. Hierdurch ergeben sich schneidartige Längs- oder Schneidkanten 38,40 im Randbereich des Schneidelementes 26.

Entsprechend der Schnittdarstellung ist die Sonotrode 20 bzw. deren Kopf symmetrisch ausgebildet, weist demzufolge zwei Schneidelemente 26 und entsprechende angrenzende Schweißflächen 28, 30, 32, 34 auf.

Die der Sonotrode 20 bzw. deren Kopf zugeordnete Gegenelektrode bzw. der Amboss 21 weist im Schnitt eine Quaderform auf mit oberseitig verlaufenden zwei zweiten Schweißflächen 42, 44, die außenseitig in gewohnter Wiese eine Strukturierung wie Kreuzriffelung aufweisen können.

Zwischen den zwei zweiten Schweißflächen 42, 44 verläuft im Ausführungsbeispiel eine kanalartige Längsaussparung 46, die den Amboss 21 in seiner Stirnfläche durchsetzt. Dabei weist die Längsaussparung 46 öffnungsseitig eine geringere Breite als bodenseitig auf. Ferner kann im Boden 48 eine Senke oder Vertiefung 50 vorgesehen sein, um beim Schneiden anfallendes Material zu sammeln bzw. aufzunehmen.

Des Weiteren sollte die Längsaussparung 46 in Bezug auf ihre Längskanten bzw. -ränder 52, 54 scharfkantig ausgebildet sein, um so im gewünschten Umfang ein Abscheren des zwischen den durch Schweißen abgedichteten Bereichen des Rohres 10 zu entfernenden Rohrmaterials sicherzustellen, das in den Bodenbereich der Längsaussparung 46 fällt.

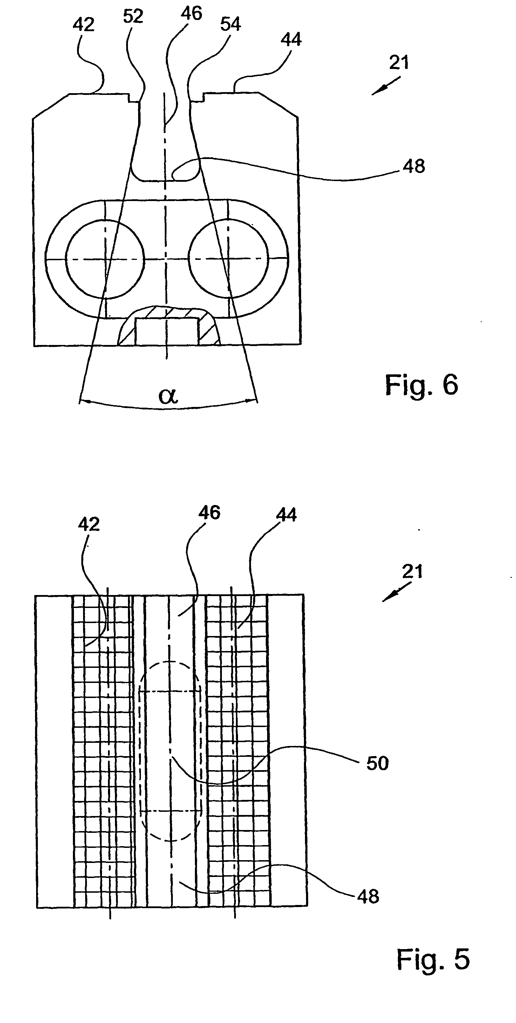

Aus der Schnittdarstellung gemäß Fig. 6 ergibt sich, dass die Aussparung 46 sich im Querschnitt aus einem öffnungsseitig verlaufenden Rechteckabschnitt und einem zum Boden 48 führenden trapezartigen Abschnitt zusammensetzt, dessen Seitenwandung einen Winkel α mit 10° ≤ α ≤ 30° einschließen können.

Ist bevorzugterweise die dem Schneidelement 26 zugeordnete Aussparung 46 als Längsaussparung in dem Amboss 21 ausgebildet, sind andere Geometrien gleichfalls möglich. Insbesondere ist es nicht erforderlich, dass die Aussparung den Amboss 21 in seinen Stirnflächen durchsetzt. So besteht auch die Möglichkeit, dass die Aussparung in eine den Amboss 21 durchsetzende senkrecht zu den zweiten Schweißflächen 42, 44 verlaufende Öffnung übergeht, über die das beim Schneiden anfallende Rohrmaterial entfernbar ist.

## Patentansprüche

1. Vorrichtung zum fluiddichten Abdichten und Trennen eines Rohrabschnittes (10, 16, 18) mittels einer Ultraschallschweißvorrichtung, umfassend eine Sonotrode (20) mit zwei zueinander beabstandeten ersten Schweißflächen (22, 24), denen zwei zweite Schweißflächen (42, 44) der Gegenelektrode (21) zugeordnet sind, und zwischen den zwei ersten Schweißflächen verlaufendem über den ersten Schweißflächen vorstehenden Trennelement (26), dem eine Aussparung (46) zwischen den zwei zweiten Schweißflächen der Gegenelektrode zugeordnet ist,
**dadurch gekennzeichnet,**
**dass** Breite öffnungsseitigen Bereichs der Aussparung (46) geringer als Breite bodenseitigen Bereichs der Aussparung ist.

2. Vorrichtung nach Anspruch 1,
**dadurch gekennzeichnet,**
**dass** sich die Aussparung (46) im Schnitt aus einem öffnungsseitig verlaufenden rechteckigern äußeren Abschnitt und einem trapezförmigen inneren Abschnitt zusammensetzt.

3. Vorrichtung nach Anspruch 1,
**dadurch gekennzeichnet,**
**dass** Boden (48) der Aussparung (46) eine Vertiefung (50) aufweist.

4. Vorrichtung nach Anspruch 1,
**dadurch gekennzeichnet,**
**dass** Breite des im Schnitt vorzugsweise rechteckförmigen Trenn- oder Schneidelementes (26) geringer als öffnungsseitig verlaufende Breite der Aussparung (46) ist.

5. Vorrichtung nach Anspruch 1,
**dadurch gekennzeichnet,**
**dass** gegenelektrodenseitig verlaufende Fläche (36) des Trenn- oder Schneidelementes (26) konkav ausgebildet ist.

6. Vorrichtung nach Anspruch 1,
**dadurch gekennzeichnet,**
**dass** die ersten Schweißflächen (22, 24) eine konvex verlaufende Oberfläche aufweisen.

7. Vorrichtung nach Anspruch 6,
**dadurch gekennzeichnet,**
**dass** die konvex verlaufenden Oberflächen (22, 24) trenn- oder schneidelementseitig jeweils in einen in einer gemeinsamen Ebene verlaufenden Innenabschnitt (32, 34) übergehen, wobei die Ebene parallel oder im Wesentlichen parallel der Außenfläche (36) verläuft.

8. Vorrichtung nach zumindest Anspruch 1,
**dadurch gekennzeichnet,**
**dass** Längskanten (38, 40) des Schneidelementes (26) scharfkantig ausgebildet sind.

9. Vorrichtung nach Anspruch 1,
**dadurch gekennzeichnet,**
**dass** die Aussparung (46) eine kanalförmige Stirnflächen der Gegenelektrode (21) durchsetzende Längsaussparung ist.

10. Vorrichtung nach Anspruch 1,
**dadurch gekennzeichnet,**
**dass** öffnungsseitiger Rand (52, 54) der Aussparung (56) scharfkantig ausgebildet ist.

## Claims

1. Device for the fluid-tight sealing and separation of a pipe section (10, 16, 18) by means of an ultrasonic welding device, comprising a sonotrode (20) with two welding surfaces (22, 24) distant to each other, to which two second welding surfaces (42, 44) of the counter-electrode (21) are assigned, and a separating element (26) arranged between the two first welding surfaces and projecting above the first welding surfaces, to which separating element a notch (46) between the two second welding surfaces of the counter-electrode is assigned,
**characterized in**
**that** the opening side area of the notch (46) has a width that is smaller than the width of the bottom side area of the recess.

2. Device according to claim 1,
**characterized in**
**that** in cross-section the notch (46) is composed of a rectangular outer section extending on the opening side and a trapezoidal inner section.

3. Device according to claim 1,
**characterized in**
**that** the bottom (48) of the notch (46) comprises a recess (50).

4. Device according to claim 1,
**characterized in**
**that** width of the separating or cutting element (26), which preferably has a rectangular profile, is less than width of the notch (46) extending on the opening side.

5. Device according to claim 1,
**characterized in**
**that** counter-electrode side surface (36) of the separating or cutting element (26) is concave.

6. Device according to claim 1,
**characterized in**
**that** the first welding surfaces (22, 24) have a surface extending convexly.

7. Device according to claim 6,
**characterized in**
**that** the convex surfaces (22, 24) on the separating or cutting element side each transit into an inner section (32, 34) extending in a common plane, wherein the plane runs parallel or substantially parallel to the outer surface (36).

8. Device according to claim 1,
**characterized in**
**that** longitudinal edges (38, 40) of the cutting element (26) are designed as sharp edges.

9. Device according to claim 1,
**characterized in**
**that** the notch (46) is a longitudinal recess penetrating channel-shaped end faces of the counter-electrode (21).

10. Device according to claim 1,
**characterized in**
**that** opening side edge (52, 54) of the notch (56) is designed as sharp edge.

## Revendications

1. , Dispositif destiné à étancher par rapport aux fluides et à sectionner une section de tube (10, 16, 18) au moyen d'une soudeuse à ultrasons, comprenant une sonotrode (20) avec deux premières surfaces de soudage distantes l'une de l'autre (22, 24), auxquelles sont conjuguées deux secondes surfaces de soudage (42, 44) de la contre-électrode (21), et un élément séparateur (26) passant entre les deux premières surfaces de soudage et s'étendant au-delà des premières surfaces de soudage, auquel est conjugué un évidement (46) entre les deux secondes surfaces de soudage de la contre-électrode,
**caractérisé en ce**
**que** la largeur de la zone du côté ouvert de l'évidement (46) est inférieure à la largeur de la zone du fond de l'évidement.

2. Dispositif selon la revendication 1,
**caractérisé en ce**
**que** dans sa section transversale, l'évidement (46) se compose d'une section extérieure rectangulaire s'étendant du côté de l'ouverture et d'une section intérieure trapézoïdale.

3. Dispositif selon la revendication 1,
**caractérisé en ce**
**que** le fond (48) de l'évidement (46) présente une cavité (50).

4. Dispositif selon la revendication 1,
**caractérisé en ce**
**que** la largeur de l'élément séparateur ou sectionneur (26) de préférence rectangulaire dans sa section transversale est inférieure à la largeur de l'évidement (46) du côté ouvert.

5. Dispositif selon la revendication 1,
**caractérisé en ce**
**que** la surface (36) de l'élément séparateur ou sectionneur (26) du côté de la contre-électrode est concave.

6. Dispositif selon la revendication 1,
**caractérisé en ce**
**que** les premières surfaces de soudage (22, 24) présente une surface convexe.

7. Dispositif selon la revendication 6,
**caractérisé en ce**
**que** les surfaces convexes (22, 24) du côté de l'élément séparateur ou sectionneur se prolongent par une section intérieure (32, 34) s'étendant dans un plan commun, le plan étant parallèle ou pour l'essentiel parallèle à la surface extérieure (36).

8. Dispositif selon la revendication 1,
**caractérisé en ce**
**que** les arêtes longitudinales (38, 40) de l'élément sectionneurs (26) sont des arêtes vives.

9. Dispositif selon la revendication 1,
**caractérisé en ce**
**que** l'évidement (46) est un évidement longitudinal en forme de canal traversant une face frontale de la contre-électrode (21).

10. Dispositif selon la revendication 1,
**caractérisé en ce**
**que** le bord du côté de l'ouverture (52, 54) de l'évidement (56) est un bord vif.
